(19) Europäisches Patentamt
European Patent Office
Office européen des brevets

(11) EP 0 426 637 B2

(12) **NEW EUROPEAN PATENT SPECIFICATION**

(45) Date of publication and mention of the opposition decision:
**26.09.2001 Bulletin 2001/39**

(45) Mention of the grant of the patent:
**05.04.1995 Bulletin 1995/14**

(21) Application number: **90870174.1**

(22) Date of filing: **09.10.1990**

(51) Int Cl.[7]: **C08F 4/76**, C08F 4/603, C08F 10/00

(54) **Preparation of metallocene catalysts for polymerization of olefins**

Herstellung von Metallocenkatalysatoren für Olefinpolymerisation

Préparation de catalyseurs métallocènes pour la polymérisation d'oléfines

(84) Designated Contracting States:
**AT BE CH DE DK ES FR GB GR IT LI LU NL SE**

(30) Priority: **30.10.1989 US 419046**

(43) Date of publication of application:
**08.05.1991 Bulletin 1991/19**

(73) Proprietor: **FINA TECHNOLOGY, INC.**
**Houston, Texas 77267-4412 (US)**

(72) Inventors:
- **Ewen, John A.**
  **Houston, Texas 77058 (US)**
- **Elder, Michael J.**
  **Friendswood, Texas 77546 (US)**

(74) Representative: **Leyder, Francis et al**
**c/o Fina Research S.A.**
**Dept. Brevets**
**Zone Industrielle C**
**7181 Seneffe (Feluy) (BE)**

(56) References cited:
**EP-A- 0 277 003**
**EP-A- 0 277 004**
**EP-A- 0 426 638**
**EP-A- 0 427 796**

- **JOURNAL OF AMERICAN CHEMICAL SOCIETY, vol. 108, 1986, pages 7410-7411, American Chemical Society; R.F. JORDAN et al.: "Ethylene polymerization by a cationic dicyclopentadienylzirconium(IV) alkyl complex"**
- **JOURNAL OF AMERICAN CHEMICAL SOCIETY, vol. 100, nr. 8, pp. 2389-2399, 1970, R. Schrock et al.**
- **JOURNAL OF AMERICAN CHEMICAL SOCIETY, vol. 108, pp. 1718-1719, 1986, R.F. Jourdan et al.**
- **J. ORGANOMETALLIC CHEMISTRY, vol, 369, C13-C17, 1989, A. Tilley et al.**
- **J. ORGANOMETALLIC CHEMISTRY, vol. 434, C1-C5, 1992, M. Bochmann et al.**
- **MAKROMOL. CHEM.MACROMOL. SYMP., vol. 66, pp. 179-190, 1993, J. EWEN et al.**

EP 0 426 637 B2

**Description**

BACKGROUND OF THE INVENTION

FIELD OF THE INVENTION: This invention relates, in general, to a process for preparing catalysts and, specifically, to a process for preparing catalysts for polymerization of olefins.

DESCRIPTION OF RELATED ART: Olefins, especially propylene, may be polymerized to form polyolefins in various forms: isotactic, syndiotactic and atactic. Isotactic polypropylene contains principally repeating units with identical configurations and only a few erratic, brief inversions in the chain. Isotactic polypropylene may be structurally represented as

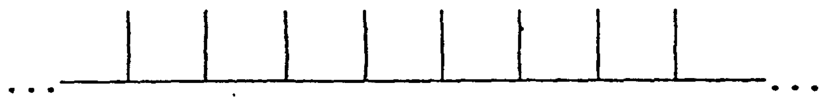

Isotactic polypropylene is capable of being a highly crystalline polymer with a high melting point and other desirable physical properties that are considerably different from the polymer in an amorphous (noncrystalline) state.

A syndiotactic polymer contains principally units of exactly alternating stereoisomers and is represented by the structure:

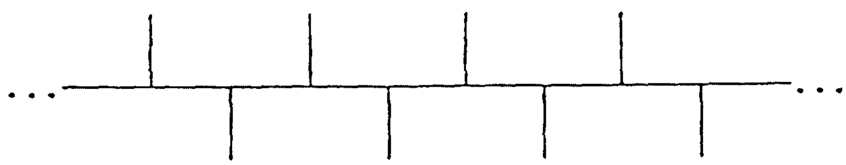

A polymer chain showing no regular order of repeating unit configurations is an atactic polymer. In commercial applications, a certain percentage of atactic polymer is typically produced with the isotactic form.

Polymerization of olefins is primarily with Zeigler-Natta catalysts. One family of Zeigler-Natta catalysts is Group IVB metallocene compounds with methylaluminoxane as a cocatalyst. It has been demonstrated that Zeigler-Natta catalysts for olefin polymerization can be formed by combining a group IVB metallocene with an ionic compound.

$$\begin{array}{l} Cp^{*}{}_{2}M^{-}R + [C][A] \quad -> Cp^{*}{}_{2}{}^{+}M\text{-}R[A]^{-} + L[C] \\ \qquad\quad \backslash \\ \qquad\qquad L \end{array}$$

Cp* - pentamethylcyclopentadienyl
M - Group IVB metal
R - alkyl
L - ligand
[C] - cation
[A] - anion

The resulting compound is a metallocene cation which acts as a catalyst. The cation [C] of the ionic compound reacts with the metallocene to generate an ion pair. The anion, [A], is not coordinated or is only loosely coordinated with the cationic metallocene.

The following methods have been used to produce the above reaction:

One-Electron Oxidation - This method is illustrated in "Ethylene Polymerization by a Cationic Dicyclopentadienylzirconium(IV) Alkyl Complex", R.F. Jordan, C.S.Bajgur, R. Willett, B. Scott, J. Am. Chem. Soc., p. 7410-7411, Vol. 108 (1986). These early examples used a Lewis base to make the metal cation less electrophilic and [BPh4]- was the anion where Ph is $C_6H_5$. The reaction occurred in a coordinating solvent. These catalysts were usually of low activity.

Protonation - This method is illustrated by "Synthesis and Insertion Reactions of Cationic Alkylbis-(cyclopentadienyl)titanium Complexes", M. Bochmann, L.M.Wilson, J. Chem. Soc. Commun., p. 1610-1611, (1986); "Cationic Alkylbis(cyclopentadienyl)titanium Complexes", M. Bochmann, L. Wilson, Organometallics, p. 2556-2563, Vol. 6, (1987); Insertion Reactions of Nitriles in Cationic Alkylbis(cyclopentadienyl)titanium Complexes, M. Bochmann, L. Wilson, Organometallics, p. 1147-1154, Vol. 7 (1987).

European Patent Application 0-277-003 relates to work by Turner on a catalyst prepared by a protonation method. A bis(cyclopentadienyl) metal compound is combined with a compound having a cation capable of donating a proton and an anion having a plurality of boron atoms. For example, the following reaction illustrates the invention:

bis(cyclopentadienyl)hafnium dimethyl + N,N-dimethylanilinium

bis(7,8-dicarbaundecaborato) cobaltate(III)

$\rightarrow [Cp_2HfMe][B] + CH_4$ + N,N-dimethylaniline

where [B] is 7,8-dicarbaundecaborane.

European Patent Application 0-277-004 also relates to work by Turner on a catalyst prepared by a protonation method. A bis(cyclopentadienyl) metal compound is combined with an ionic compound having a cation which will irreversibly react with a ligand on the metal compound and an anion having a plurality of lipophilic radicals around a metal or metalloid ion. For example, the following reaction illustrates the invention:

tri(n-butyl)ammonium tetra(pentafluorophenyl)boron +

bis(cyclopentadienyl)zirconium dimethyl $\rightarrow$

$[Cp_2ZrMe][BPh_4] + CH_4$ + tri(n-butyl)N

A by-product of the protonation reaction is a Lewis base (amine) some of which can coordinate to the cations and thus inhibit catalyst activity. Starting materials must be chosen carefully to avoid generating particular amines which are catalyst poisons. In addition, the catalyst and the polymer produced with this catalyst contains undesirable and toxic residual amines.

EP-A-0427696 filed in the U.S. on 10.10.89 and published in Europe on 15.01.91 discloses the use of a metallocene catalyst having an unbalanced metallocene cation and a stable noncoordinating counter anion for said metallocene cation, said metallocene cation being characterized by a cationic metallocene ligand having sterically dissimilar ring structures joined to a positively charged coordinating transition metal atom, one of said ring structures being a substituted or unsubstituted cyclopentadienyl ring and the other of said ring structures being a substituted cyclopentadienyl group which is sterically different from said first cyclopentadienyl group, and both of said cyclopencadienyl groups being in a stereorigid relationship relative to said coordinating metal atom to prevent rotation of said rings, and processes for the syndiotactic propagation of a polymer chain derived from an ethylenically unsaturated monomer which contains three or more carbon atoms.

Ligand abstraction - The ligand abstraction method is illustrated in "Multiple Metal-Carbon Bonds", R. R. Schrock, P. R. Sharp, J. Am. Chem. Soc., p.2389-2399, Vol. 100, No, 8 (April, 2, 1978).

In most known processes, methylaluminoxane (MAO) is added with the metallocene compound to act as a cocatalyst. The function of MAO is to initiate the alkylation and promote ionization of the metallocene compound. The cocatalyst is a scavenging agent which reduces the poisons which decrease catalyst activity. Present known processes require a large excess of MAO to be added. MAO has the disadvantage of being relatively expensive. This results in high costs for the catalyst system.

## SUMMARY OF THE INVENTION

Accordingly, it is an object of this invention to provide a process for making an improved catalyst for polymerization of olefins.

And, it is an object of this invention to provide a process for making a catalyst with relatively high activity.

Also, it is an object of this invention to synthesize metallocene cations with no Lewis base as a side product.

Further, it is an object of this invention to eliminate the necessity to chose starting materials to control the by-products which may be produced as catalyst poisons.

Additionally, it is an object of this invention to eliminate methylaluminoxane (MAO) as a cocatalyst in polymerization of polypropylene.
Moreover, it is an object of this invention to produce polymers which are free of aluminum oxide.
As well, it is an object of this invention to produce a polymer which is free of undesirable and toxic amines.
These and other objects are accomplished by mixing an ionizing agent, such as triphenylcarbenium tetrakis (pentafluorophenyl)boronate, with neutral derivatives of metallocenes and adding the mixture to an olefin.

DESCRIPTION OF THE INVENTION

The invention is for a process of producing a catalyst for polymerization of olefins by ionizing a metallocene with an ionizing agent which does not contain an active proton and which has an anion which is not coordinated or is only loosely coordinated to the cation of the metallocene. The anion is also chemically unreactive with the cation.
In the new synthesis procedure the ionizing ionic compound is mixed with neutral derivatives of metallocenes producing the following reaction:

$$Cp_2MR_p + [C^*][A^*] \rightarrow [Cp_2MR_{p-1}]^+[A^*]^- + R[C^*]$$

where Cp is a cyclopentadienyl or a substituted cyclopentadienyl group, each Cp being the same or different, M is a Group IIIB, IVB, VB or VIB metal, R is a hydride, a halogen, an amide or a hydrocarbyl radical, each R being the same or different, except that if R is a hydride only one R is a hydride, p is from 1 to 4, C* is a carbonium, oxonium or sulfonium cation and A* is an anion which is not coordinated or is only loosely coordinated to the cation of the metallocene and is chemically unreactive with $[Cp_2MR_{p-1}]^+$.
Each reactant is placed in a solvent which is not coordinated or is only loosely coordinated with the metallocene cation. Examples of such solvents are toluene and methylene chloride. The preferred solvent is toluene. The two reactants are dissolved separately in the same solvent and are mixed together at room temperature at a mole ratio ranging from 10 moles of metallocene : 1 mole of ionizing compound to 1 mole of metallocene : 10 moles of ionizing compound. A preferred mole ratio is from 2 moles of metallocene : 1 mole of ionizing compound to 1 mole of metallocene : 2 moles of ionizing compound. The most preferred mole ratio is 1 mole of metallocene : 1 mole of ionizing compound. After mixing, the mixture is added to an olefin under conditions to effect polymerization. The preferred olefins are ethylene and propylene, the most preferred being propylene.
An ionic compound containing a carbonium, oxonium or sulfonium ion, such as triphenylcarbenium tetrakis (pentafluorophenyl)boronate, is mixed with a neutral derivative of a metallocene. Triphenylcarbenium tetrakis(pentafluorophenyl)boronate acts an ionizing agent which ionizes the metallocene. A cationic metallocene catalyst is formed.
Triphenylcarbenium tetrakis(pentafluorophenyl)boronate $[Ph_3C][BPh^*_4]$ is produced by the following reaction:

$$Ph_3CCl + LiBPh^*_4 \rightarrow [Ph_3C][BPh^*_4] + LiCl$$

where Ph is phenyl and Ph* is pentafluorophenyl. Triphenylcarbenium is a cation. Tetrakis-(pentafluorophenyl) boronate is an anion.
Triphenylcarbenium tetrakis(pentafluorophenyl)boronate was produced with the following laboratory method. A bright yellow solution of 27.1 mmoles of $Ph_3CCl$ in 150 cc of methylene chloride was added dropwise at 25°C to 25 gm of $LiB(C_6F_5)_4$ slurried in 350 cc of methylene chloride. The orange slurry was stirred for 30 minutes and then filtered. The solids containing $[Ph_3C][BPh^*_4]$ and LiCl were washed with methylene chloride. The combined wash and filtrate was concentrated to 75 cc and then cannulated into 400 cc of pentane with rapid stirring. The solids were washed several times with pentane and small amounts of toluene until a bright yellow powder of $[Ph_3C][BPh^*_4]$ was obtained. The yield was 20 grams (75%).
The neutral derivative of a metallocene is of the general formula:

$$Cp_2MR_p$$

wherein Cp is a cyclopentadienyl or a substituted cyclopentadienyl group, each Cp being the same or different, M is a Group IIIB, IVB, VB or VIB metal, preferably a Group IV metal, such as titanium, hafnium or zirconium, most preferably zirconium for higher catalyst activity and hafnium for higher molecular weight, R is a hydride, a halogen, an amide or a hydrocarbyl radical such as an aklyl, aryl, alkenyl, aklyaryl or arylaklyl radical having from 1 to 20 carbon atoms, each

R being the same or different, except that if R is a hydride only one R is a hydride and p is from 1 to 4. The preferred neutral derivatives of metallocene are ethylene bis(tetrahydroindenyl)zirconium dimethyl, ethylenebis(indenyl)zirconium dimethyl and isopropylidene(cyclopentadienyl-1-fluorenyl)zirconium dimethyl. The most preferred neutral derivative of metallocene is ethylene bis(indenyl)zirconium dimethyl.

Polymerization of the olefin is accomplished by any of the known means for polymerization of olefins with metallocene catalysts, for example polymerization in bulk, slurry or gas phase. For polypropylene, polymerization temperatures range from -80°C to 150°C, preferably 25°C to 90°C and most preferably from 50 °C to 80°C.

The invention having been generally described, the following examples are given as particular embodiments of the invention and to demonstrate the practice and advantages thereof. It is understood that the examples are given by way of illustration and are not intended to limit the specification or the claims to follow in any manner.

EXAMPLE I

55 mg of triphenylcarbenium tetrakis(pentafluorophenyl) boronate was dissolved in 5 cc of toluene. 40 mg of $Et(IndH4)_2ZrMe_2$ was dissolved in 5 cc of toluene. The two solutions were mixed together for 5 minutes at room temperature, giving a clear yellow solution.

The mixture was added by syringe to a 2 liter Zipperclave reactor. 1.0 liter of propylene was added to the reactor. Reactor temperature was set to 70°C. The contents of the reactor were agitated. The temperature remained at 70°C during the sixty minute polymerization period after which propylene was vented from the reactor. The contents of the reactor were washed with acetone and dried in a vacuum oven.

The polymer was analyzed for melting point. The melting point was derived from differential scanning calorimetry (DSC). The results are shown in Table I.

EXAMPLE II

The procedure of Example I was repeated using 40 mg of triphenylcarbenium tetrakis-(pentafluorophenyl) boronate and 20 mg of $Et(IndH_4)_2ZrMe_2$. The results are shown in Table I.

EXAMPLE III

The procedure of Example I was repeated using 30 mg of triphenylcarbenium tetrakis-(pentafluorophenyl) boronate and 15 mg of $Et(IndH_4)_2ZrMe_2$. The reactor temperature was set at 80°C and the temperature remained at 80°C. The results are shown in Table I.

EXAMPLE IV

The procedure of Example I was repeated using 60 mg of triphenylcarbenium tetrakis-(pentafluorophenyl) boronate and 60 mg of $Et(IndH_4)ZrMe_2$. Reactor temperature was set at 50°C and the temperature remained at 100°C. Run time was 10 minutes. The results are shown in Table I.

EXAMPLE V

The procedure of Example I was repeated using 55 mg of triphenylcarbenium tetrakis-(pentafluorophenyl) boronate and 50 mg of $Et(IndH_4)ZrMe_2$. Reactor temperature was set at 50°C and increased to 168°C. Run time was 10 minutes. The results are shown in Table I.

EXAMPLE VI

The procedure of Example I was repeated using 100 mg of triphenylcarbenium tetrakis-(pentafluorophenyl) boronate and 60 mg of $Et(Ind)_2ZrMe_2$. Reactor temperature was set at 50°C and the temperature remained at 50 ° C. The results are shown in Table I.

EXAMPLE VII

The procedure of Example I was repeated using 100 mg of triphenylcarbenium tetrakis-(pentafluorophenyl) boronate and 60 mg of $Et(Ind)_2ZrMe_2$. The temperature was set at 50°C and remained at 50 °C. The results are shown in Table I.

EXAMPLE VIII*

The procedure of Example I was repeated using 120 mg of triphenylcarbenium tetrakis-(pentafluorophenyl) boronate and 80 mg of iPr(Cp-I-Flu)$ZrMe_2$. Reactor temperature was set at 70°C and the temperature increased above 100°C. The results are shown in Table I.

EXAMPLE IX*

The procedure of Example I was repeated using 100 mg of triphenylcarbenium tetrakis-(pentafluorophenyl) boronate and 60 mg of iPr(Cp-I-Flu)$ZrMe_2$. Reactor temperature was set at 70°C and the temperature increased to 78° C. The results are shown in Table I.

EXAMPLE X*

The procedure of Example I was repeated using 60 mg of triphenylcarbenium tetrakis-(pentafluorophenyl) boronate and 40 mg of ipr(Cp-I-Flu)$ZrMe_2$. Reactor temperature was set at 70°C. The results are shown in Table I.

The following results are from the experimental runs described above using the method of the present invention.

TABLE I

| RUN # | CATALYST, + mg | IONIZING AGENT, + + mg | TIME, min. |
|---|---|---|---|
| | $Et(IndH_4)_2ZrMe_2$ | $[Ph_3C][BPh^*_4]$ | |
| 1 | 40 | 55 | 60 |
| 2 | 20 | 40 | 60 |
| 3 | 15 | 30 | 80 |
| 4 | 50 | 60 | 10 |
| 5 | 50 | 55 | 10 |
| | $Et(Ind)_2ZrMe_2$ | $[Ph_3C][BPh^*_4]$ | |
| 6 | 60 | 100 | 60 |
| 7 | 60 | 100 | 30 |
| | iPr(Cp-1-Flu)$ZrMe_2$ | $[Ph_3C][BPh^*_4]$ | |
| 8* | 80 | 120 | 5 |
| 9* | 60 | 100 | 60 |
| 10* | 40 | 60 | 60 |

+ $Et(IndH_4)_2ZrMe_2$ = Ethylenebis(tetrahydroindenyl)zirconium dimethyl $Et(Ind)_2ZrMe_2$ = Ethylenebis(indenyl)zirconium dimethyl iPr(Cp-1-Flu) $ZrMe_2$ = isopropylidene (cyclopentadienyl-1-fluorenyl) zirconium dimethyl

+ +$[Ph_3C][BPh^*_4]$ = triphenylcarbenium tetrakis(pentafluorophenyl)boronate.

* outside the scope of the claims

| RUN # | TEMP, ° C | YIELD, gm | Melting Temp ° C |
|---|---|---|---|
| 1 | 70 | 9 | 138 |
| 2 | 50 | 55 | 138 |
| 3 | 80 | 45 | 131 |
| 4 | 50* | 74 | 134 |
| 5 | 50* | 135 | - |
| 6 | 50 | 19 | 137 |
| 7 | 50 | 11 | 134 |
| 8 | 70* | 224 | 115 |

*Runaway reaction; peak reaction temperature >100 ° C

* outside the scope of the claims

(continued)

| RUN # | TEMP, ° C | YIELD, gm | Melting Temp ° C |
|---|---|---|---|
| 9 | 70** | 51 | - |
| 10 | 70*** | 186 | 119 |

**Exotherm; peak reaction temperature 78°C

***Exotherm

The process described by this invention synthesizes cations which are used as catalysts in olefin polymerization. The process of making catalysts with this invention produces catalysts having high activity and does not produce by-products which can inhibit catalyst activity. This new synthesis is a clean reaction which does not produce a Lewis base. The process generates active catalysts by removing a methyl anion from a group IVB metallocene derivative.

## Claims

**1.** A process for making a catalyst comprising:

a) mixing an ionizing ionic compound with a neutral derivative of a metallocene; and
b) allowing contact between the ionizing ionic compound and the neutral derivative of a metallocene such that the metallocene is ionized by the ionizing ionic compound and an ion pair is formed in which the metallocene cation acts as a catalyst;

wherein the neutral derivative of a metallocene is of the general formula:

$$CP_2MR_p$$

wherein Cp is a cyclopentadienyl or a substituted cyclopentadienyl group, each Cp being the same or different, M is a Group IVB metal, R is a hydride, a halogen, an amide or a hydrocarbyl radical, each R being the same of different, except only one R is a hydride and p is 2 with the exclusion of metallocene cations **characterized by** a cationic metallocene ligand having sterically dissimilar ring structures joined to a positively charged coordinating transition metal atom, one of said ring structures being a substituted or unsubstituted cyclopentadienyl ring and the other of said ring structures being a substituted cyclopentadienyl group which is sterically different from said first cyclopentadienyl group, and both of said cyclopencadienyl groups being in a stereorigid relationship relative to said coordinating metal atom to prevent rotation of said rings

wherein, before mixing, the ionizing ionic compound is dissolved in a solvent which is not coordinated or is only loosely coordinated with the metallocene cation;

wherein the ionizing ionic compound does not contain an active proton and contains a carbonium, oxonium or sulfonium cation; and

wherein the anion of the ionizing ionic compound is not coordinated or is only loosely coordinated to the metallocene cation and is chemically unreactive with the metallocene cation.

**2.** A process as recited in Claim 1 wherein, before mixing, the ionizing ionic compound is dissolved in a solvent which is not coordinated with the metallocene cation.

**3.** A process as recited in Claim 2 wherein, before mixing the neutral derivative of a metallocene is separately dissolved in the same solvent.

**4.** A process as recited in Claim 3 wherein the mole ratio of the neutral derivative of a metallocene to the ionic compound ranges from 10 moles of metallocene : 1 mole of ionizing compound to 1 mole of metallocene : 10 moles of ionizing compound.

**5.** A process as recited in Claim 4 wherein the mole ratio of the neutral derivative of a metallocene to the ionic compound ranges from 2 moles of metallocene : 1 mole of ionizing compound to 1 mole of metallocene : 2 moles of ionizing compound.

6. A process as recited in Claim 5 wherein the mole ratio of the neutral derivative of a metallocene to the ionic compound ranges is 1 mole of metallocene : 1 mole of ionizing compound.

7. A process as recited in Claim 4 wherein the Group IVB metal is chosen from the group consisting of titanium, zirconium and hafnium.

8. A process as recited in Claim 7 wherein the metal is hafnium.

9. A process as recited in Claim 7 wherein the metal is zirconium.

10. A process as recited in Claim 9 wherein R is a hydrocarbyl radical chosen from the group consisting of an aklyl radical, an aryl radical, an alkenyl radical, an alkylaryl radical and an arylakyl radical having from 1 to 20 carbon atoms.

11. A process as recited in Claim 10 wherein the neutral derivative of a metallocene is chosen from the group consisting of ethylene bis(tetrahydroindenyl)zirconium dimethyl, ethylene bis(indenyl)zirconium dimethyl and isopropylidene (cyclopentadienyl-l-fluorenyl)zirconium dimethyl.

12. A process as recited in Claim 11 wherein the neutral derivative of a metallocene is ethylenebis(indenyl) zirconium dimethyl.

13. A process as recited in Claim 12 wherein the ionic compound is triphenylcarbenium tetrakis-(pentafluorophenyl) boronate.

14. A process as recited in Claim 13 wherein the solvent is toluene.

15. A process for polymerization of an olefin comprising:

a)mixing an ionizing ionic compound with a neutral derivative of a metallocene;
b)allowing contact between the ionizing ionic compound and the neutral derivative of a metallocene such that the metallocene is ionized by the ionizing ionic compound and an ion pair is formed in which the metallocene cation acts as a catalyst; and
c)contacting the catalyst with the olefin under conditions to effect polymerization;

wherein the neutral derivative of a metallocene is of the general formula:

$$Cp_2MR_p$$

wherein Cp is a cyclopentadienyl or a substituted cyclopentadienyl group, each Cp being the same or different, M is a Group IIIB, IVB, VB or VIB metal, R is a hydride, a halogen, an amide or a hydrocarbyl radical, each R being the same or different, except only that if R is a hydride one R is a hydride and p is from 1 to 4; and with the exclusion, when the olefine has at least three carbon atoms, of metallocene cations **characterized by** a cationic metallocene ligand having sterically dissimilar ring structures joined to a positively charged coordinating transition metal atom, one of said ring structures being a substituted or unsubstituted cyclopentadienyl ring and the other of said ring structures being a substituted cyclopentadienyl group which is sterically different from said first cyclopentadienyl group, and both of said cyclopencadienyl groups being in a stereorigid relationship relative to said coordinating metal atom to prevent rotation of said rings

wherein the ionizing ionic compound does not contain an active proton and contains a carbonium, oxonium or sulfonium cation; wherein the anion of the ionizing ionic compound is not coordinated or is only loosely coordinated to the metallocene cation and is chemically unreactive with the metallocene cation; and

wherein, before mixing, the ionic compound is dissolved in a solvent which is not coordinated or is only loosely coordinated with the metallocene cation.

16. A process as recited in Claim 15 wherein, before mixing, the ionic compound is dissolved in a solvent which is not coordinated with the metallocene cation.

17. A process as recited in Claim 16 wherein, before mixing, the neutral derivative of a metallocene is dissolved in the

same solvent.

**18.** A process as recited in Claim 17 wherein the mole ratio of the neutral derivative of a metallocene to the ionic compound ranges from 10 moles of metallocene : 1 mole of ionizing compound to 1 mole of metallocene : 10 moles of ionizing compound.

**19.** A process as recited in Claim 18 wherein the mole ratio of the neutral derivative of a metallocene to the ionic compound ranges from 2 moles of metallocene : 1 mole of ionizing compound to 1 mole of metallocene : 2 moles of ionizing compound.

**20.** A process as recited in Claim 19 wherein the mole ratio of the neutral derivative of a metallocene to the ionic compound ranges is 1 mole of metallocene : 1 mole of ionizing compound.

**21.** A process as recited in Claim 18 wherein the metal is a Group IVB metal chosen from the group consisting of titanium, zirconium and hafnium.

**22.** A process as recited in Claim 21 wherein the metal is hafnium.

**23.** A process as recited in Claim 21 wherein the metal is zirconium.

**24.** A process as recited in Claim 23 wherein R is a hydrocarbyl chosen from the group consisting of an aklyl radical, an aryl radical, an alkenyl radical, an alkylaryl radical and an arylakyl radical having from 1 to 20 carbon atoms.

**25.** A process as recited in Claim 24 wherein the neutral derivative of a metallocene is chosen from the group consisting of ethylene bis(tetrahydroindenyl)zirconium dimethyl, ethylene bis(indenyl)zirconium dimethyl and isopropylidene (cyclopentadienyl-I-fluorenyl)zirconium dimethyl.

**26.** A process as recited in Claim 25 wherein the neutral derivative of a metallocene is ethylene bis-(indenyl)zirconium dimethyl.

**27.** A process as recited in Claim 26 wherein the ionic compound is triphenylcarbenium tetrakis-(pentafluorophenyl) boronate.

**28.** A process as recited in Claim 27 wherein the solvent is toluene.

**29.** A process as recited in Claim 28 beginning at a reaction temperature which ranges from -80°C to 150° C.

**30.** A process as recited in Claim 29 beginning at a reaction temperature which ranges from 25°C to 90°C.

**31.** A process as recited in Claim 30 beginning at a reaction temperature which ranges from 50°C to 80°C.

**Patentansprüche**

**1.** Verfahren zur Herstellung eines Katalysators, das umfasst :

a) ein Mischen einer ionisierenden Ionenverbindung mit einem neutralen Derivat eines Metallocens; und

b) die Ermöglichung eines Kontaktes zwischen der ionisierenden Ionenverbindung und dem neutralen Derivat eines Metallocens, derart dass das Metallocen durch die ionisierende Ionenverbindung ionisiert wird und dass ein Ionenpaar gebildet wird in dem das Metallocenkation als ein Katalysator wirkt;

bei welchem das neutrale Derivat eines Metallocens die nachfolgende allgemeine Formel aufweist:

$$Cp_2MR_p$$

in welcher Cp eine Cyclopentadienyl- oder eine substituierte Cyclopentadienylgruppe ist, wobei ein jedes

Cp identisch oder verschieden ist, m ein Metall der Gruppe IVB ist, R ein Hydrid, ein Halogen, ein Amid oder ein Hydrocarbylradikal ist, wobei ein jedes R identisch oder verschieden ist, mit der Ausnahme, dass nur ein R ein Hydrid ist und dass p gleich 2 ist, unter Ausschluss von Metallocenkationen, die **gekennzeichnet** sind durch einen kationischen Metallocenliganden, der Ringstrukturen aufweist, die vom sterischen Standpunkt aus gesehen ungleich sind und die an ein positiv geladenes koordinierendes Atom eines Übergangsmetalls gebunden sind, wobei eine der Ringstrukturen ein substituierter Cyclopentadienylring oder ein nicht substituierter Cyclopentadienylring ist, während die andere der Ringstrukturen eine substituierte Cyclopentadienylgruppe ist, die vom sterischen Standpunkt aus gesehen verschieden ist von der ersten Cyclopentadienylgruppe, und wobei sich die zwei Cyclopentadienylgruppen in einem stereorigiden Verhältnis in Bezug auf das koordinierende Metallatom befinden, um eine Rotation der Ringe zu verhindern;

in welchem, vor dem Mischen, die ionisierende Ionenverbindung aufgelöst wird in einem Lösungsmittel, das keine Koordinierung aufweist oder das nur eine lose Koordinierung mit dem Metallocenkation aufweist;

in welchem die ionisierende Ionenverbindung kein aktives Proton enthält und ein Kation von Carbonium, Oxonium oder Sulfonium enthält; und

in welchem das Anion der ionisierenden Ionenverbindung keine Koordinierung aufweist oder es nur eine lose Koordinierung zu dem Metallocenkation aufweist und es chemisch unreaktiv mit dem Metallocenkation bleibt.

**2.** Verfahren gemäß dem Patentanspruch 1, bei welchem, vor dem Mischen, die ionisierende Ionenverbindung aufgelöst wird in einem Lösungsmitteln, das keine Koordinierung mit dem Metallocenkation aufweist.

**3.** Verfahren gemäß dem Patentanspruch 2, bei welchem, vor dem Mischen, das neutrale Derivat eines Metallocens getrennt in demselben Lösungsmittel aufgelöst wird.

**4.** Verfahren gemäß dem Patentanspruch 3, bei welchem das molare Verhältnis des neutralen Derivats eines Metallocens in Bezug auf die Ionenverbindung in dem Bereich zwischen demjenigen von 10 Mol Metallocen : 1 Mol der ionisierenden Verbindung und demjenigen von 1 Mol Metallocen : 10 Mol der ionisierenden Verbindung liegt.

**5.** Verfahren gemäß dem Patentanspruch 4, bei welchem das molare Verhältnis des neutralen Derivats eines Metallocens in Bezug auf die Ionenverbindung in dem Bereich zwischen demjenigen von 2 Mol Metallocen : 1 Mol der ionisierenden Verbindung und demjenigen von 1 Mol Metallocen : 2 Mol der ionisierenden Verbindung liegt.

**6.** Verfahren gemäß dem Patentanspruch 5, bei welchem das molare Verhältnis des neutralen Derivats eines Metallocens in Bezug auf die Ionenverbindung in dem Bereich von 1 Mol Metallocen : 1 Mol der ionisierenden Verbindung liegt.

**7.** Verfahren gemäß dem Patentanspruch 4, bei welchem das Metall der Gruppe IVB ausgewählt wird aus der Gruppe bestehend aus Titan, Zirkon und Hafnium.

**8.** Verfahren gemäß dem Patentanspruch 7, bei welchem das Metall aus Hafnium besteht.

**9.** Verfahren gemäß dem Patentanspruch 7, bei welchem das Metall aus Zirkon besteht.

**10.** Verfahren gemäß dem Patentanspruch 9, bei welchem R ein Radikal Hydrocarbyl darstellt, das ausgewählt wird aus der Gruppe bestehend aus einem Radikal Alkyl, einem Radikal Aryl, einem Radikal Alkenyl, einem Radikal Alkylaryl und einem Radikal Arylalkyl mit 1 bis 20 Kohlenstoffatomen.

**11.** Verfahren gemäß dem Patentanspruch 10, bei welchem das neutrale Derivat eines Metallocene ausgewählt wird aus der Gruppe bestehend aus Ethylen-bis(tetrahydroindenyl)-zirkonium-dimethyl, Ethylen-bis(indenyl)-zirkonium-dimethyl und Isopropyliden-(cyclopentadienyl-1-fluorenyl)-zirkoniumdimethyl.

**12.** Verfahren gemäß dem Patentanspruch 11, bei welchem das neutrale Derivat eines Metallocens aus Ethylen-bis (indenyl)-zirkonium-dimethyl besteht.

**13.** Verfahren gemäß dem Patentanspruch 12, bei welchem die Ionenverbindung aus Triphenylcarbenium-tetrakis-(pentafluorophenyl)-boronat besteht.

**14.** Verfahren gemäß dem Patentanspruch 13, bei welchem das Lösungsmittel aus Toluol besteht.

**15.** Verfahren zur Polymerisierung eines Olefins, das umfasst:

a) ein Mischen einer ionisierenden Ionenverbindung mit einem neutralen Derivat eines Metallocens;

b) die Ermöglichung eines Kontaktes zwischen der ionisierenden Ionenverbindung und dem neutralen Derivat eines Metallocens, sodass das Metallocen durch die ionisierende Ionenverbindung ionisiert wird und dass ein Ionenpaar gebildet wird in dem das Metallocenkation als ein Katalysator wirkt; und

c) die Herstellung des Kontaktes zwischen dem Katalysator und dem Olefin unter Bedingungen die eine Polymerisation bewerkstelligen;

im welchem das neutrale Derivat eines Metallocens die nachfolgende allgemeine Formel aufweist:

$$Cp_2MR_p$$

in welcher Cp eine Cyclopentadienylgruppe oder eine substituierte Cyclopentadienylgruppe ist, wobei ein jedes Cp identisch oder verschieden ist, m ein Metall du Gruppe IIIB, IVB, VB oder VIB ist, R ein Hydrid, ein Halogen, ein Amid oder ein Hydrocarbylradikale ist, wobei ein jedes R identisch oder verschieden ist, mit der Ausnahme, dass wenn R ein Hydrid ist, bloß ein R ein Hydrid ist und dass p zwischen 1 und 4 liegt, unter Ausschluss, wenn das Olefin wenigstens drei Atome Kohlenstoff besitzt, der Metallocenkationen, die **gekennzeichnet** sind durch einen kationischen Metallocenliganden, der Ringstrukturen aufweist, die vom sterischen Standpunkt aus gesehen ungleich sind und die an ein positiv geladenes koordinierendes Atom eines Übergangsmetalls gebunden sind, wobei eine der Ringstrukturen ein substituierter Cyclopentadienylring oder ein nicht substituierter Cyclopentadienylring ist, während die andere der Ringstrukturen eine substituierte Cyclopentadienylgruppe ist, die vom sterischen Standpunkt aus gesehen verschieden ist von der ersten Cyclopentadienylgruppe, und wobei sich die zwei Cyclopentadienylgruppen in einem stereorigiden Verhältnis in Bezug auf das koordinierende Metallatom befinden, um eine Rotation der Ringe zu verhindern;

in welchem die ionisierende Ionenverbindung kein aktives Proton enthält und ein Kation von Carbonium, Oxonium oder Sulfonium enthält; und

in welchem das Anion der ionisierenden Ionenverbindung keine Koordinierung aufweist oder es nur eine lose Koordinierung zu dem Metallocenkation aufweist und es chemisch unreaktiv mit dem Metallocenkation bleibt, und

in welchem, vor dem Mischen, die Ionenverbindung aufgelöst wird in einem Lösungsmittel, das keine Koordinierung aufweist oder das nur eine lose Koordinierung mit dem Metallocenkation aufweist.

**16.** Verfahren gemäß dem Patentanspruch 15, bei welchem, vor dem Mischen, die Ionenverbindung aufgelöst wird in einem Lösungsmittel, das keine Koordinierung mit dem Metallocenkation aufweist.

**17.** Verfahren gemäß dem Patentanspruch 16, bei welchem, vor dem Mischen, das neutrale Derivat eines Metallocens in demselben Lösungsmittel aufgelöst wird.

**18.** Verfahren gemäß dem Patentanspruch 17, bei welchem das molare Verhältnis des neutralen Derivats eines Metallocens in Bezug auf die Ionenverbindung in dem Bereich zwischen demjenigen von 10 Mol Metallocen : 1 Mol der ionisierenden Verbindung und demjenigen von 1 Mol Metallocen : 10 Mol der ionisierenden Verbindung liegt.

**19.** Verfahren gemäß dem Patentanspruch 18, bei welchem das molare Verhältnis des neutralen Derivats eines Metallocens in Bezug auf die Ionenverbindung in dem Bereich zwischen demjenigen von 2 Mol Metallocen : 1 Mol der ionisierenden Verbindung und demjenigen von 1 Mol Metallocen : 2 Mol der ionisierenden Verbindung liegt.

**20.** Verfahren gemäß dem Patentanspruch 19, bei welchem das molare Verhältnis des neutralen Derivats eines Metallocens in Bezug auf die Ionenverbindung in dem Bereich von 1 Mol Metallocen : 1 Mol der ionisierenden Verbindung liegt.

**21.** Verfahren gemäß dem Patentanspruch 18, bei welchem das Metall ein Metall der Gruppe IVB ist, das ausgewählt wird aus der Gruppe bestehend aus Titan, Zirkon und Hafnium.

**22.** Verfahren gemäß dem Patentanspruch 21, bei welchem das Metall aus Hafnium besteht.

**23.** Verfahren gemäß dem Patentanspruch 21, bei welchem das Metall aus Zirkon besteht.

**24.** Verfahren gemäß dem Patentanspruch 23, bei welchem R ein Hydrocarbyl ist, das ausgewählt wird aus der Gruppe bestehend aus einem Radikal Alkyl, einem Radikal Aryl, einem Radikal Alkenyl, einem Radikal Alkylaryl und einem Radikal Arylalkyl mit 1 bis 20 Kohlenstoffatomen.

**25.** Verfahren gemäß dem Patentanspruch 24, bei welchem das neutrale Derivat eines Metallocens ausgewählt wird aus der Gruppe bestehend aus Ethylen-bis(tetrahydroindenyl)-zirkonium-dimethyl, Ethylen-bis(indenyl)-zirkonium-dimethyl und Isopropyliden-(cyclopentadienyl-1-fluorenyl)-zirkoniumdimethyl.

**26.** Verfahren gemäß dem Patentanspruch 25, bei welchem das neutrale Derivat eines Metallocens aus Ethylen-bis (indenyl)-zirkonium-dimthyl besteht.

**27.** Verfahren gemäß dem Patentanspruch 26, bei welchem die Ionenverbindung aus Triphenylcarbeniumtetrakis(pentafluorophenyl)boronat besteht.

**28.** Verfahren gemäß dem Patentanspruch 27, bei welchem das Lösungsmittel aus Toluol besteht.

**29.** Verfahren gemäß dem Patentanspruch 28, das bei einer Reaktionstemperatur einsetzt, die in dem Bereich von -80°C bis 150°C variiert.

**30.** Verfahren gemäß dem Patentanspruch 29, das einsetzt bei einer Reaktionstemperatur, die in dem Bereich von 25°C bis 90°C variiert

**31.** Verfahren gemäß dem Patentanspruch 30, das einsetzt bei einer Reaktionstemperatur, die in dem Bereich von 50°C bis 80°C variiert.

## Revendications

**1.** Procédé pour la fabrication d'un catalyseur consistant:

a) à mélanger un composé ionique ionisant avec un dérivé neutre d'un métallocène; et

b) à permettre le contact entre le composé ionique ionisant et le dérivé neutre d'un métallocène de sorte que le métallocène est ionisé par le composé ionique ionisant et une paire d'ions est formée dans laquelle le cation du métallocène agit comme un catalyseur;

dans lequel le dérivé neutre d'un métallocène est de la formule générale:

$$Cp_2MR_p$$

dans laquelle Cp est un groupe cyclopentadiényle ou cyclopentadiényle substitué, chaque Cp étant identique ou différent, M est un métal du Groupe IVB, R est un hydrure, un halogène, un amide ou un radical hydrocarbyle, chaque R étant identique ou différent, à l'exception du fait qu'il n'y a qu'un R qui est un hydrure, et p est égal à 2, à l'exclusion de cations de métallocène **caractérisés par** un ligand de métallocène cationique présentant des structures de cycle dissemblables du point de vue stérique jointes à un atome de métal de transition de coordination chargé positivement, une desdites structures de cycle étant un cycle de cyclopentadiényle substitué ou non substitué et l'autre desdites structures de cycle étant un groupe cyclopentadiényle substitué qui est différent du point de vue stérique dudit premier groupe cyclopentadiényle, et les deux desdits groupes cyclopentadiényles se trouvant dans une relation stéréorigide par rapport audit atome de métal de coordination pour empêcher la rotation desdits cycles;

dans lequel, avant le mélange, le composé ionique ionisant est dissous dans un solvant qui n'effectue pas de coordination ou qui présente uniquement une coordination lâche avec le cation du métallocène;

dans lequel le composé ionique ionisant ne contient pas de proton actif et contient un cation de carbonium, d'oxonium ou de sulfonium; et

dans lequel l'anion du composé ionique ionisant n'effectue pas de coordination ou il présente uniquement

une coordination lâche avec le cation du métallocène et il est chimiquement non réactif avec le cation du métallocène.

**2.** Procédé suivant la revendication 1, dans lequel, avant le mélange, le composé ionique ionisant est dissous dans un solvant qui ne présente pas de coordination avec le cation du métallocène.

**3.** Procédé suivant la revendication 2, dans lequel, avant le mélange, le dérivé neutre d'un métallocène est dissous séparément dans le même solvant.

**4.** Procédé suivant la revendication 3, dans lequel le rapport molaire du dérivé neutre d'un métallocène sur le composé ionique varie de 10 moles de métallocène : 1 mole de composé ionisant à 1 mole de métallocène : 10 moles de composé ionisant.

**5.** Procédé suivant la revendication 4, dans lequel le rapport molaire du dérivé neutre d'un métallocène sur le composé ionique varie de 2 moles de métallocène : 1 mole de composé ionisant à 1 mole de métallocène : 2 moles de composé ionisant.

**6.** Procédé suivant la revendication 5, dans lequel le rapport molaire du dérivé neutre d'un métallocène sur le composé ionique est de 1 mole de métallocène : 1 mole de composé ionisant.

**7.** Procédé suivant la revendication 4, dans lequel le métal du Groupe IVB est choisi dans le groupe constitué de titane, de zirconium et d'hafnium.

**8.** Procédé suivant la revendication 7, dans lequel le métal est de l'hafnium.

**9.** Procédé suivant la revendication 7, dans lequel le métal est du zirconium.

**10.** Procédé suivant la revendication 9, dans lequel R est un radical hydrocarbyle choisi dans le groupe constitué d'un radical alkyle, d'un radical aryle, d'un radical alcényle, d'un radical alkylaryle et d'un radical arylalkyle contenant de 1 à 20 atomes de carbone.

**11.** Procédé suivant la revendication 10, dans lequel le dérivé neutre d'un métallocène est choisi dans le groupe constitué d'éthylène bis(tétrahydroindényl)zirconium diméthyle, d'éthylène bis(indényl)zirconium diméthyle et d'isopropylidène (cyclopentadiényl-1-fluorényl)zirconium diméthyle.

**12.** Procédé suivant la revendication 11, dans lequel le dérivé neutre d'un métallocène est l'éthylène bis(indényl)zirconium diméthyle.

**13.** Procédé suivant la revendication 12, dans lequel le composé ionique est le triphénylcarbénium tétrakis(pentafluorophényl)boronate.

**14.** Procédé suivant la revendication 13, dans lequel le solvant est du toluène.

**15.** Procédé pour la polymérisation d'une oléfine consistant:

a) à mélanger un composé ionique ionisant avec un dérivé neutre d'un métallocène;

b) à permettre le contact entre le composé ionique ionisant et le dérivé neutre d'un métallocène de sorte que le métallocène est ionisé par le composé ionique ionisant et une paire d'ions est formée dans laquelle le cation du métallocène agit comme un catalyseur; et

c) à mettre en contact le catalyseur avec l'oléfine sous des conditions permettant d'effectuer une polymérisation;

dans lequel le dérivé neutre d'un métallocène est de la formule générale:

$$Cp_2MR_p$$

dans laquelle Cp est un groupe cyclopentadiényle ou cyclopentadiényle substitué, chaque Cp étant identique ou différent, M est un métal du Groupe IIIB, IVB, VB ou VIB, R est un hydrure, un halogène, un amide ou un radical hydrocarbyle, chaque R étant identique ou différent, à l'exception du fait que si R est un hydrure, un seul R est un hydrure, et p est de 1 à 4; et à l'exclusion, lorsque l'oléfine contient au moins trois atomes de carbone, de cations de métallocène **caractérisés par** un ligand de métallocène cationique présentant des structures de cycle dissemblables du point de vue stérique jointes à un atome de métal de transition de coordination chargé positivement, une desdites structures de cycle étant un cycle de cyclopentadiényle substitué ou non substitué et l'autre desdites structures de cycle étant un groupe cyclopentadiényle substitué qui est différent du point de vue stérique dudit premier groupe cyclopentadiényle, et les deux desdits groupes cyclopentadiényles se trouvant dans une relation stéréorigide par rapport audit atome de métal de coordination pour empêcher la rotation desdits cycles;

dans lequel le composé ionique ionisant ne contient pas de proton actif et contient un cation de carbonium, d'oxonium ou de sulfonium;

dans lequel l'anion du composé ionique ionisant n'effectue pas de coordination ou il présente uniquement une coordination lâche avec le cation du métallocène et il est chimiquement non réactif avec le cation du métallocène; et

dans lequel, avant le mélange, le composé ionique est dissous dans un solvant qui n'effectue pas de coordination ou qui présente uniquement une coordination lâche avec le cation du métallocène.

**16.** Procédé suivant la revendication 15, dans lequel, avant le mélange, le composé ionique est dissous dans un solvant qui ne présente pas de coordination avec le cation du métallocène.

**17.** Procédé suivant la revendication 16, dans lequel, avant le mélange, le dérivé neutre d'un métallocène est dissous dans le même solvant.

**18.** Procédé suivant la revendication 17, dans lequel le rapport molaire du dérivé neutre d'un métallocène sur le composé ionique varie de 10 moles de métallocène : 1 mole de composé ionisant à 1 mole de métallocène : 10 moles de composé ionisant.

**19.** Procédé suivant la revendication 18, dans lequel le rapport molaire du dérivé neutre d'un métallocène sur le composé ionique varie de 2 moles de métallocène : 1 mole de composé ionisant à 1 mole de métallocène : 2 moles de composé ionisant.

**20.** Procédé suivant la revendication 19, dans lequel le rapport molaire du dérivé neutre d'un métallocène par rapport au composé ionique est de 1 mole de métallocène : 1 mole de composé ionisant.

**21.** Procédé suivant la revendication 18, dans lequel le métal est un métal du Groupe IVB choisi dans le groupe constitué de titane, de zirconium et d'hafnium.

**22.** Procédé suivant la revendication 21, dans lequel le métal est de l'hafnium.

**23.** Procédé suivant la revendication 21, dans lequel le métal est du zirconium.

**24.** Procédé suivant la revendication 23, dans lequel R est un radical hydrocarbyle choisi dans le groupe constitué d'un radical alkyle, d'un radical aryle, d'un radical alcényle, d'un radical alkylaryle et d'un radical arylalkyle contenant de 1 à 20 atomes de carbone.

**25.** Procédé suivant la revendication 24, dans lequel le dérivé neutre d'un métallocène est choisi dans le groupe constitué d'éthylène bis(tétrahydroindényl) zirconium diméthyle, d'éthylène bis(indényl)zirconium diméthyle et d'isopropylidène (cyclopentadiényl-1-fluorényl)zirconium diméthyle.

**26.** Procédé suivant la revendication 25, dans lequel le dérivé neutre d'un métallocène est l'éthylène bis(indényl) zirconium diméthyle.

**27.** Procédé suivant la revendication 26, dans lequel le composé ionique est le triphénylcarbénium tétrakis(pentafluorophényl)boronate.

**28.** Procédé suivant la revendication 27, dans lequel le solvant est du toluène.

**29.** Procédé suivant la revendication 28, commençant à une température de réaction qui varie de -80°C à 150°C.

**30.** Procédé suivant la revendication 29, commençant à une température de réaction qui varie de 25°C à 90°C.

**31.** Procédé suivant la revendication 30, commençant à une température de réaction qui varie de 50°C à 80°C.